(19) Europäisches Patentamt
European Patent Office
Office européen des brevets

(11) **EP 1 495 433 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(21) Anmeldenummer: **03746302.3**

(22) Anmeldetag: **16.04.2003**

(51) Int Cl.:
*G06F 19/00* $^{(2011.01)}$      *G01N 15/14* $^{(2006.01)}$

(86) Internationale Anmeldenummer:
**PCT/EP2003/003960**

(87) Internationale Veröffentlichungsnummer:
**WO 2003/088123 (23.10.2003 Gazette 2003/43)**

(54) **VERFAHREN ZUR UNTERSUCHUNG CHEMISCHER UND/ODER BIOLOGISCHER PROBEN MITTELS PARTIKELBILDERN**

METHOD FOR ANALYZING CHEMICAL AND/OR BIOLOGICAL SAMPLES BY MEANS OF PARTICLE IMAGES

PROCEDE POUR ANALYSER DES ECHANTILLONS CHIMIQUES ET/OU BIOLOGIQUES AU MOYEN D'IMAGES DE PARTICULES

(84) Benannte Vertragsstaaten:
**AT BE BG CH CY CZ DE DK EE ES FI FR GB GR HU IE IT LI LU MC NL PT RO SE SI SK TR**

(30) Priorität: **16.04.2002 DE 10216683**

(43) Veröffentlichungstag der Anmeldung:
**12.01.2005 Patentblatt 2005/02**

(73) Patentinhaber: **Evotec AG**
**22419 Hamburg (DE)**

(72) Erfinder:
• **KIRSCH, Achim**
  **30161 Hannover (DE)**
• **OLLIKAINEN, Olavi**
  **11611 Tallinn (EE)**

(74) Vertreter: **von Kreisler Selting Werner**
**Deichmannhaus am Dom**
**Bahnhofsvorplatz 1**
**50667 Köln (DE)**

(56) Entgegenhaltungen:
**EP-A- 0 902 394      WO-A-01/84106**
**WO-A-99/39184      WO-A-99/45366**
**US-A- 3 879 706      US-A- 5 989 835**

• **DATABASE BIOSIS [Online] BIOSCIENCES INFORMATION SERVICE, PHILADELPHIA, PA, US; September 2001 (2001-09) MESSINA JOSEPH P ET AL: "2.5D morphogenesis: Modeling landuse and landcover dynamics in the Ecuadorian Amazon." Database accession no. PREV200200134805 XP002249455 & PLANT ECOLOGY, Bd. 156, Nr. 1, September 2001 (2001-09), Seiten 75-88, September, 2001 ISSN: 1385-0237**

**Beschreibung**

Die Erfindung betrifft ein Verfahren zur Untersuchung chemischer und/oder biologischer Proben mittels Partikelbildern, das insbesondere in Hoch- oder Medium-Durchsatz-Screeninganlagen durchgeführt werden kann.

Zur Untersuchung von biologischen und/oder chemischen Aktivitäten von Substanzen bzw, in den Substanzen vorhandenen Partikeln und/oder Molekülen werden Daten der zu untersuchenden Proben aufgenommen. Zur Datenaufnahme werden Mikroskope, insbesondere konfokale Mikroskope, eingesetzt. Hierbei werden beispielsweise bestimmte Bestandteile einer Probe mit Fluoreszenzmarkern markiert, wobei aufgrund der Abgabe von Fluoreszenz dieser Marker auf Reaktionen innerhalb der Probe geschlossen werden kann.

Beispielsweise kann die Reaktion einer Zelle auf eine bestimmte Substanz dadurch festgestellt werden, dass beispielsweise ein mit einem Fluoreszenzmarker markiertes Molekül in den Zellkern wandert. Ein hierzu geeignetes Untersuchungsverfahren ist in US 5,989,835 beschrieben. Bei diesem Verfahren wird in einem ersten Schritt der Kern einer Zelle markiert bzw. eingefärbt. Die Einfärbung erfolgt mit einem Fluoreszenzmarker, der durch einen UV-Laser angeregt werden kann. Ferner wird ein Transkriptionsfaktor in dem den Zellkern umgebenden Zytoplasma mit einem anderen Fluoreszenzmarker markiert. Durch Anregen des Zellkerns mit einem UV-Laser und einem Schwellwertverfahren wird eine den Zellkern vom Zytoplasma separierende Maske erstellt. Anschließend wird die Maske verkleinert, so dass sichergestellt ist, dass ein erster, im Wesentlichen kreisförmiger, Bereich ausschließlich innerhalb des Kerns angeordnet ist. Im nächsten Schritt wird der Maskenrand vergrößert, so dass ein Ring entsteht, der ausschließlich im Zytoplasma liegt. Durch einen Vergleich der beiden Zellbereiche kann beispielsweise festgestellt werden, dass ein mit einem Farbstoffmarker markierter Wirkstoff in den Zellkern gewandert ist, da sich hierbei die Helligkeit der beiden Bereiche verändert.

Dieses in US 5,989,835 beschriebene Verfahren weist zunächst den Nachteil auf, dass der Zellkern lokalisiert werden muss. Dies ist nur durch das Verwenden spezieller Farbstoffe bzw. spezieller Farbstoffmarker möglich, da sichergestellt sein muss, dass diese mit dem Zellkern reagieren, um die Lage des Zellkerns feststellen zu können. Die hierbei verwendeten Farbstoffmarker, beispielsweise Hoechst 33342 und 33258, können nur mit einem UV-Laser angeregt werden. UV-Laser sind jedoch in der Anschaffung teuer, und haben aufgrund des hohen Kühlwasserverbrauchs hohe Betriebskosten. Ein weiterer Nachteil des vorstehend beschriebenen Verfahrens besteht darin, dass aussagekräftige Ergebnisse nur erzielt werden können, wenn der Ring vollständig innerhalb des Zytoplasmas angeordnet ist. Dies ist beispielsweise nicht der Fall, wenn der Zellkern im Randbereich des Zytoplasmas angeordnet ist. Ein weiterer Nachteil des vorstehend beschriebenen Verfahrens besteht darin, dass stets eine fest definierte Fläche in Form des Zellkerns definiert und erfasst wird. Das Verfahren ist somit aufwendig und unflexibel.

Die Aufgabe der Erfindung besteht darin, ein Untersuchungsverfahren für chemische und/oder biologische Proben zu schaffen, bei welchem der Aufwand zum Erfassen von Änderungen der Probe reduziert wird.

Die Lösung der Aufgabe erfolgt erfindungsgemäß durch die Merkmale des Anspruchs 1.

Gemäß dem erfindungsgemäßen Verfahren, das insbesondere für Hoch- und Medium-Durchsatz-Screeninganlagen geeignet ist, werden in einem ersten Schritt Partikelbilder von mindestens einer Probe erzeugt. Diese Bilder weisen jeweils mindestens einen in der Probe enthaltenen Partikel, beispielsweise eine Zelle, auf. Üblicherweise weist jedes Bild mehr als 10, insbesondere mehr als 50 Partikel, insbesondere Zellen, auf. Die Erzeugung des Partikelbildes erfolgt beispielsweise mit Hilfe eines Mikroskops und/oder einer Bilderfassungseinrichtung, wie einer CCD-Kamera, die mit einer geeigneten Bild-Auswerteeinrichtung verbunden sein kann.

Erfindungsgemäß werden Partikelzonen definiert, die von subpartikulären Kompartimenten unabhängig sind. Vorzugsweise sind die Zonen hierbei innerhalb eines Partikelbildes angeordnet bzw. definiert.

Vorzugsweise wird eine Partikelfläche, d.h. die von einem in dem erzeugten Bild enthaltenen Partikel eingenommene Fläche, in mehrere Partikelzonen unterteilt. Die Partikelfläche wird hierbei dadurch definiert, dass sich in dem Partikelbild der Vordergrund von dem Hintergrund unterscheidet. Hierzu kann ein Schwellwert vorgegeben werden, der die Grenze zwischen Hintergrund und Vordergrund definiert. In Abhängigkeit des gewählten Schwellwertes umfasst die im Partikelbild definierte Partikelfläche die tatsächlich vorhandene Fläche des Partikels oder eine ggf. etwas kleinere oder größere Fläche. Vorzugsweise ist die Partikelfläche eben. Hierbei ist es vorteilhaft, konfokale Mikroskope einzusetzen, da mit konfokalen Mikroskopen eindeutige Ebenen innerhalb der Probe definiert werden können, so dass in dem Partikelbild eine eindeutige Partikelfläche festgelegt werden kann.

Jede Partikelfläche der Partikelbilder, die vorzugsweise unabhängig voneinander von mindestens einer Probe erzeugt werden, wird erfindungsgemäß in Partikelzonen eingeteilt. Hierbei erfolgt das Einteilen der Partikelzonen unabhängig von subpartikulären Kompartimenten. Handelt es sich bei den Partikeln beispielsweise um Zellen, so erfolgt das Zerlegen der Partikelfläche in Partikelzonen unabhängig von subzellulären Kompartimenten, wie beispielsweise Zellkerne, Mitochondrien, Lysosomen, etc. Vorzugsweise wird die Partikelfläche in mindestens fünf, besonders bevorzugt in mindestens zehn Partikelzonen unterteilt.

Erfindungsgemäß können beispielsweise mehrere Zonenbilder einer einzigen Probe zu unterschiedlichen Zeitpunkten erzeugt werden. Diese Zonenbilder können sodann zur Auswertung beispielsweise miteinander verglichen werden. Ebenso ist es möglich, von mehreren Proben zu gleichen Zeitpunkten Partikelbilder zu erzeugen und diese miteinander zu vergleichen. Hierbei kann beispielsweise eine Probe als Referenzprobe dienen, der kein Reagenz beigegeben wurde. Ebenso ist eine Kombination dieser beiden Verfahrensweisen möglich.

Ebenso ist es möglich, dass mehrere Partikelbilder aufgenommen werden und mindestens eine Partikelzone definiert wird, die sich über mehrere Partikelbilder erstreckt.

Im nächsten Schritt werden Partikeldaten der Probe oder ggf. unterschiedlicher Proben bzw. der Partikelbilder zonenabhängig erfasst. Es erfolgt somit ein Erfassen beispielsweise der mittleren Helligkeit einzelner Zonen bei unterschiedlichen Proben. Die einzeln erzeugten Partikelbilder von mehreren Proben zeigen die Partikel in unterschiedlichen Zuständen, da beispielsweise den Proben zugefügte unterschiedliche Reagenzien in den Proben unterschiedliche Reaktionen hervorrufen. Beispielsweise wird ein mit einem Marker markiertes Reagenz bei einer Probe in die Zelle eindringen und bei einer anderen Probe außerhalb des Zellplasmas bleiben. Hierbei sind beispielsweise die erfassten Helligkeiten der einzelnen Zonen der unterschiedlichen Partikelbilder unterschiedlich, wohingegen die erfassten Helligkeiten der einzelnen Zonen vor der Zugabe der unterschiedlichen Reagenzien bei sämtlichen Proben im Wesentlichen identisch war. Die hierbei erfassten Partikeldaten werden sodann im nächsten Schritt ausgewertet. Beispielsweise kann aufgrund einer Helligkeitsverschiebung innerhalb der Partikelzonen auf die Bewegung von mit einem Farbmarker markierten Wirkstoffen oder dgl. geschlossen werden. Anstelle des Einsatzes von Farbmarkern kann auch die Eigenstrahlung geeigneter Partikel festgestellt werden. Hierbei kann sowohl die Fluoreszenz von Farbstoffmarkern als auch die Eigenstrahlung im sichtbaren sowie im nichtsichtbaren Bereich liegen.

Es ist somit nach dem erfindungsgemäßen Verfahren nicht erforderlich, die Probe mit einem speziellen Farbstoff zur Markierung des Zellkerns oder desgleichen zu versetzen, da beispielsweise die Lage des Zellkerns zur Durchführung des erfindungsgemäßen Verfahrens nicht bekannt sein muss. Auch andere subpartikuläre Kompartimente müssen zur Durchführung des erfindungsgemäßen Verfahrens nicht näher bestimmt werden. Vielmehr erfolgt eine Einteilung der Partikelfläche in Partikelzonen, unabhängig von subpartikulären Kompartimenten. Es ist somit nicht erforderlich, entsprechende Farbstoffe einzusetzen, die nur mit einem in der Anschaffung und dem Betrieb teuren UV-Laser angeregt werden können. Die Kosten des Untersuchungsverfahrens können somit erheblich reduziert werden. Da beispielsweise bei der Untersuchung von Zellen die Definition der einzelnen Partikel- bzw. Zellenzonen unabhängig von der Lage des Zellkerns ist, können die beschriebenen Probleme, die bei der Lage des Zellkerns am Rande des Zytoplasmas bei dem in US 5,989,835 beschriebenen Verfahren auftreten, bei dem erfindungsgemäßen Verfahren nicht auftreten. Das erfindungsgemäße Verfahren ist somit erheblich flexibler.

Vorzugsweise erfolgt vor der Erfassung und anschließenden Auswertung der Partikeldaten jeweils ein Definieren der Partikelzonen.

Vorzugsweise werden bei dem erfindungsgemäßen Verfahren mehrere Proben, die jeweils eine Vielzahl von Partikeln enthalten, gleichzeitig untersucht. Hierbei erfolgt ein Vergleichen der erzeugten Partikelbilder der Proben. Die einzelnen Proben befinden sich zum selben Zeitpunkt in jeweils unterschiedlichen Zuständen. Durch einen Vergleich der Partikelbilder, d.h. der einzelnen Zonen der Partikelbilder, kann beispielsweise ein Wandern von mit einem Farbstoffmarker versehenen Reagenz oder andere Änderungen innerhalb des Partikels wahrgenommen werden.

Ferner ist es möglich, Partikelzonen derart zu definieren, dass sie außerhalb des Partikels liegen. Durch dieselben Vergleiche der Partikelzonen können beispielsweise Bewegungen von Farbstoffmarkern außerhalb der Partikel wahrgenommen werden.

Vorzugsweise wird die Probe vor dem Erzeugen des Partikelbildes eingefärbt. Durch diese Einfärbungen, die mit üblichen Farbstoffen, wie Fluoreszenzmarkern, erfolgen kann, erfolgt beispielsweise ein Einfärben der Zellen oder der die Zellen umgebenden Flüssigkeit. Durch dieses Einfärben kann die Grenze der Zellen bzw. der Partikel auf dem Partikelbild erkannt werden. Das Verwenden spezieller Farbstoffe zum Einfärben der Zellkerne ist hierzu nicht erforderlich. Da durch das Einfärben der Probe die Partikelgrenzen besser erkannt werden können, kann die Partikelfläche der einzelnen Partikel von einem Bildbearbeitungssystem leichter bestimmt werden, wobei zum Bestimmen der Partikelflächen vorzugsweise konfokale Mikroskope oder andere konfokale Optikeinrichtungen eingesetzt werden, um insbesondere einzelne, in einer bestimmten Ebene der Probe vorhandene Partikel, insbesondere Zellen, aufnehmen zu können. Insbesondere beim Einfärben der Probe ist wesentlich, dass durch das Bildverarbeitungssystem, insbesondere das konfokale Mikroskop, der Vordergrund der Probe von dem Hintergrund der Probe unterschieden werden kann. Die exakte Partikelgrenze muss hierbei nicht bestimmt werden. Es ist vielmehr ausreichend, wenn ein Partikelbild erzeugt werden kann, bei dem zumindest ein Großteil des Partikels in Partikelzonen eingeteilt wird.

Vorzugsweise erfolgt das Definieren der Partikelzonen derart, dass die gesamte Partikelfläche in Partikelzonen unterteilt ist. Die einzelnen Partikelzonen grenzen somit ohne Zwischenraum unmittelbar aneinander. Dies hat den Vorteil, dass Bewegungen von beispielsweise mit einem Farbmarker markierten Wirkstoffen genau beobachtet werden können. Es ist somit möglich, Bewegungsrichtungen einzelner oder mehrerer Wirkstoffe oder dgl. zu erfassen. Ferner ist es möglich, auch Zonen außerhalb der Partikelfläche zu definieren. Hierdurch kann beispielsweise durch einen Helligkeitsvergleich festgestellt werden, wie viele der mit einem Farbstoffmarker markierten Partikel sich innerhalb bzw. außerhalb eines Partikels, wie einer Zelle, befinden. Die Randbereiche der Partikelzonen können Bereiche unmittelbar neben dem Partikel mitumfassen, so dass es sich um Mischzonen handelt. Vorzugsweise wird jedoch erfindungsgemäß die Partikelgrenze, beispielsweise durch Einfärben der Probe, bestimmt, so dass entweder nur Partikelzonen definiert werden, oder Partikelzonen und Außenzonen oder nur Außenzonen definiert werden können.

Bei der Auswertung der Partikeldaten ist es erfindungsgemäß möglich, die Partikeldaten nicht von allen Zonen zu erfassen, sondern die Partikeldaten nur von ausgewählten Zonen zu erfassen. Beispielsweise ist es möglich, nur eine Randzone, die entlang der Grenzlinie des Partikels verläuft, zu beobachten und nur deren Partikeldaten auszuwerten. Auch können beispielsweise nur die Unterschiede der Helligkeiten einer einzigen Zone je Partikelbild beobachtet werden.

Die Definition der Partikelzonen erfolgt vorzugsweise nach einem mathematischen Modell. Hierbei werden vorzugsweise mathematische Modelle verwendet, die für die zu erwartenden Reaktionen geeignet sind. Der Ausgangspunkt ist hierbei jeweils ein Partikelbild.

Ferner ist es möglich, bei der Definition der Partikelzonen diese auf eine Weise zu definieren, dass sämtliche Zonen die gleiche Fläche aufweisen. Dies ist insbesondere bei dem Vergleich der mittleren Helligkeit einzelner Zonen untereinander vorteilhaft, da die Helligkeitsänderung nicht durch eine Größenänderung der Zone hervorgerufen bzw. beeinflusst werden kann.

Das erfindungsgemäße Verfahren ist insbesondere zur Untersuchung von Zellen enthaltenden Proben geeignet. Vorzugsweise handelt es sich somit bei einem in der Probe enthaltenen Partikel um eine Zelle, die Bestandteile eines Zellverbunds sein kann. Insbesondere besteht der Partikel ausschließlich aus einer oder mehreren Zellen. Hinsichtlich der bevorzugten Untersuchung von Zellen besteht der Kern der Erfindung daher darin, dass mehrere von subzellulären Kompartimenten unabhängige Zellzonen vorzugsweise in einer Partikelfläche, d.h. einer Zellfläche, definiert werden.

Vorzugsweise wird der Partikelzustand, insbesondere der Zellzustand, in Abhängigkeit von der Probe zugefügten Substanzen untersucht. Hierbei ist das erfindungsgemäße Verfahren besonders gut zum Drugscreening geeignet. Beispielsweise werden Proben unterschiedlicher Zellzustände untersucht, wobei der Zellzustand insbesondere Apoptose, Nekrose, Translokation von zellulären Bestandteilen, Internalisierung von membranständigen Molekülen oder Molekülkomplexen, Zelldifferenzierung, morphologisches Erscheinungsbild, Aufspaltung von subzellulären Kompartimenten und/oder Generierung von subzellulären Kompartimenten umfasst.

Nachfolgend wird die Erfindung anhand bevorzugter Ausführungsformen unter Bezugnahme auf die anliegenden Zeichnungen näher erläutert. Es zeigen:

Fign. 1-3    Skizzen von Partikelzonen, die mit unterschiedlichen Verfahren definiert wurden,

Fig. 4    Partikelbilder eines Untersuchungsbeispiels bei unterschiedlichen Zuständen,

Fig. 5    ein Diagramm der mittleren Helligkeitssignale bezogen auf die einzelnen Zonen der in Fig. 4 dargestellten Partikelbilder,

Fig. 6    Partikelbilder bei unterschiedlichen Zuständen eines weiteren Untersuchungsbeispiels und

Fig. 7    ein Diagramm der Fläche über die Zonen der in Fig. 6 dargestellten Partikelbilder.

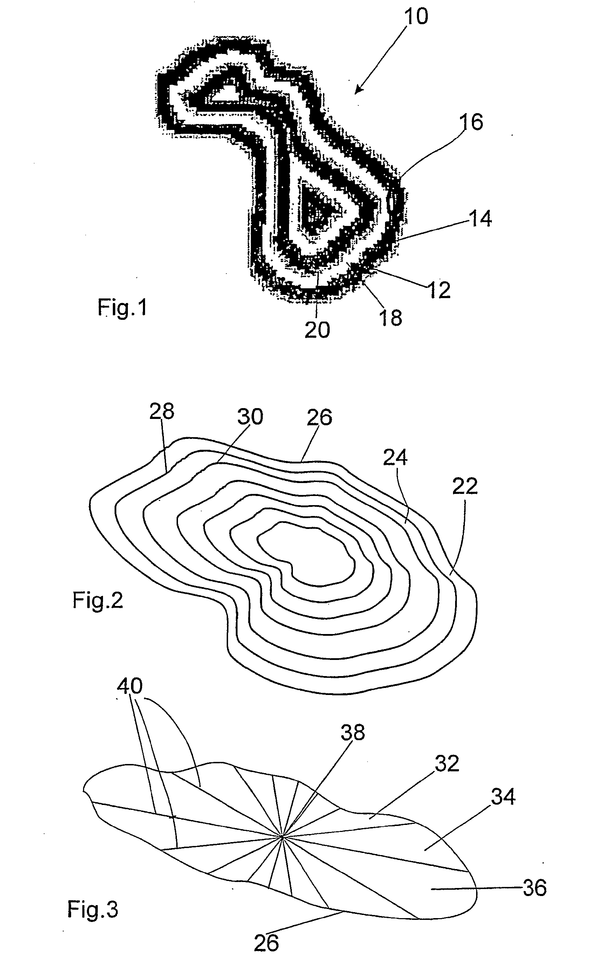

Im Folgenden werden anhand der Fign. 1-3 drei unterschiedliche erfindungsgemäße Verfahren zur Unterteilung von Partikelflächen in Partikelzonen erläutert.

In Fig. 1 ist eine Partikelfläche 10 dargestellt, wobei die äußere Linie 12 die Grenzlinie des Partikels, wie der Zelle, darstellt. Bei der Grenzlinie muss es sich nicht notwendiger Weise um die exakte Grenze des Partikels handeln. Vielmehr ist es erfindungsgemäß ausreichend, als Grenzlinie eine in Abhängigkeit eines vorbestimmten Schwellwertes vorgegebene Grenze zwischen dem Hintergrund und dem Vordergrund zu definieren. Die Unterteilung der Partikelfläche in Partikelzonen erfolgt hierbei dadurch, dass jede Zone eine innere und eine äußere Grenzlinie aufweist. Beispielsweise weist eine äußere Zone 14 als äußere Grenzlinie die Grenzlinie 12 und als innere Grenzlinie die Grenzlinie 16 auf. Die nächste, weiter innen liegende Zone 18 weist als äußere Grenzlinie die Grenzlinie 16 und als innere Grenzlinie die Grenzlinie 20 auf usw. Die Definition der Grenzlinien 16,20 erfolgt dadurch, dass diese jeweils einen im Wesentlichen konstanten Abstand zur Partikelgrenze 12 aufweisen.

Die einzelnen Zonen 14,18 können somit beispielsweise auch durch folgende Formel beschrieben werden, die das Intervall des Abstandes zur Partikelgrenze 12 definiert:

$$(N * \Delta d,\ N * \Delta d + \Delta d)$$

wobei N=0,1, ... und
$\Delta d$ eine Breite der Zone ist.

Durch vorstehende Formel wird somit in Abhän-

gigkeit von $\Delta d$ der Abstand zur Partikelgrenze 12 einzelner streifenförmiger Zonen 14,18 definiert. Hierbei ist maßgebend, dass sämtliche Zonen 14,18,20 dieselbe Breite aufweisen.

Ferner ist es möglich, mit diesem Verfahren auch Zonen zu definieren, die außerhalb der Partikelfläche 10 angeordnet sind.

Fig. 2 zeigt ein weiteres Verfahren zum Festlegen von Partikelzonen 22,24. Die hier definierten Partikelzonen 22,24 sind ebenfalls durch Grenzlinien 26,28,30 voneinander abgegrenzt. Die Zonen 22,24 weisen jedoch nicht dieselbe Breite auf. Vielmehr werden zum Bestimmen dieser Zonen konzentrische Grenzlinien 26,28,30 definiert. Die Grenzlinien 26,28,30 weisen somit ähnliche geometrische Formen auf. Vereinfacht ausgedrückt kann die Grenzlinie 28 dadurch erzeugt werden, dass die Grenzlinie 26 prozentual verkleinert wird.

Zur Definition der Zonen einer der beiden in Fig. 1 und 2 ersichtlichen Verfahren ist die Definition von Grenzlinien nicht unbedingt erforderlich. Das Verfahren kann ebenfalls dadurch durchgeführt werden, dass das Partikelbild in einzelne Pixel unterteilt wird und die Zugehörigkeit eines Pixels zu der einen oder der anderen Zone durch mathematische Formeln definiert wird. Selbstverständlich ergeben sich hierbei zwischen den Partikelzonen, die aneinander angrenzen, Grenzlinien.

Unterschiedliche Partikelzonen 32,34,36,usw. können auch mit einem anhand Fig. 3 ersichtlichen Verfahren definiert werden. Hierbei wird ein Hauptpunkt 38, bei dem es sich beispielsweise um den hellsten Punkt innerhalb der Partikelfläche 10, den geometrischen Mittelpunkt oder den Schwerpunkt handelt, definiert. Ausgehend von diesem Punkt werden vorzugsweise radial verlaufende Grenzlinien 40, die zur Abgrenzung der Partiketzonen 32,34,36,etc. dienen, definiert. Vorzugsweise ist der Öffnungswinkel der einzelnen Grenzlinien 40 konstant. Die einzelnen Grenzlinien können auch so angeordnet werden, dass die Flächen der Zonen 32,34,35 konstant sind.

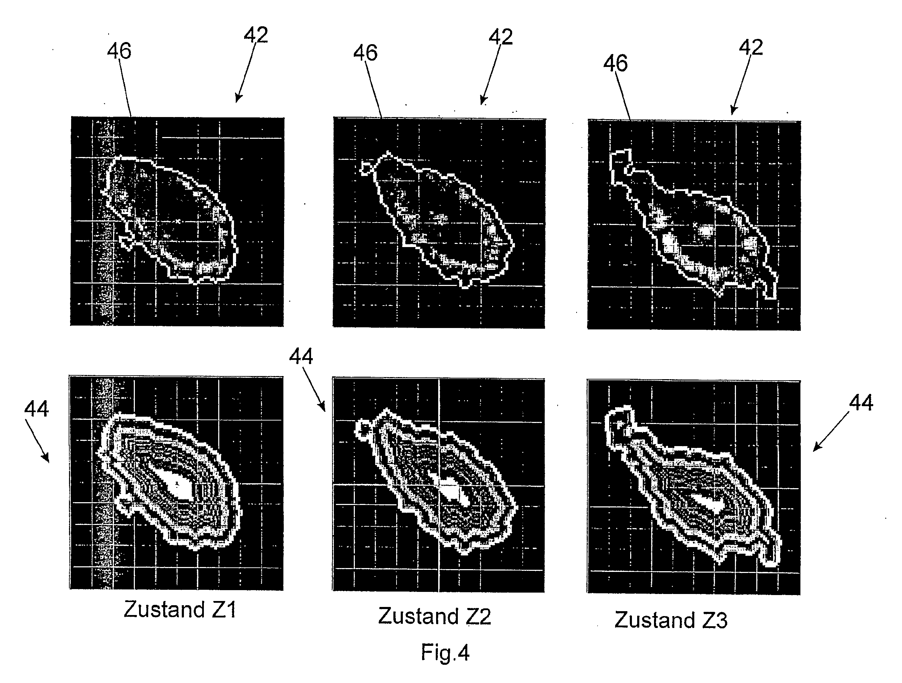

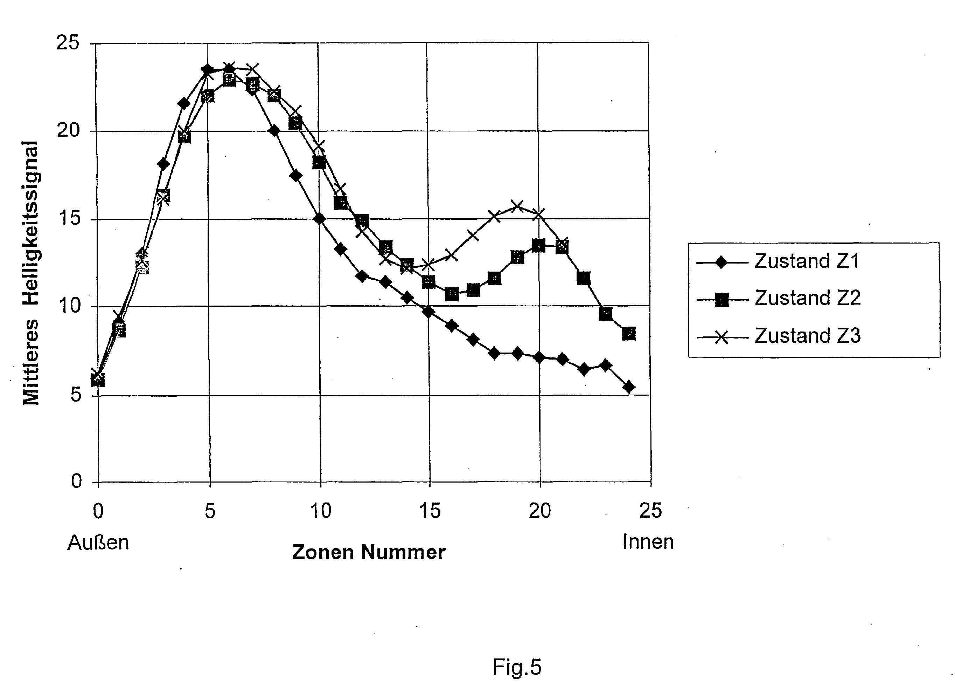

Bei dem ersten anhand der Fign. 4 und 5 dargestellten Beispiel zur Erläuterung des erfindungsgemäßen Verfahrens sind in Fig. 4 drei Partikelbilder 42 dargestellt, die unterschiedliche Zustände z1, z2 und z3 verschiedener Partikelbilder 44 aus unterschiedlichen Proben zeigen. Ferner sind zu den entsprechenden Zuständen auch die Zonenbilder 44 dargestellt, in denen die Zellen 46 mit Hilfe des anhand Fig. 1 näher beschriebenen Verfahrens in Zonen unterteilt wurden.

In dem dargestellten Beispiel werden beispielsweise in mehrere identische Proben unterschiedliche Reagenzien eingebracht. Nach einer festen Zeitspanne von ggf. mehreren Stunden werden die im dargestellten Beispiel drei Proben beobachten und es wird von jeder der drei Proben ein Partikelbild 46 sowie ein Zonenbild 44 erstellt. Es sind somit drei unterschiedliche Zonenbilder 44 erstellt, die unterschiedliche Zustände z1, z2 und z3 in den drei Proben veranschaulichen. Bei der ersten, in Fig. 4 linken, Probe erfolgte keine Reaktion auf das der Probe zugegebene Substrat. In Abhängigkeit der einzelnen definierten Zonen ergibt sich sodann der in Fig. 5 bezüglich des Zustandes z1 dargestellte Verlauf. Bei der zweiten Probe, die in der Mitte von Fig. 4 dargestellt ist, hat das Substrat eine Reaktion hervorgerufen. Das Substrat ist hierbei ins Innere der Zelle gewandert. Dies ist aus dem Diagramm in Fig. 5 ersichtlich, dass sich im Bereich der Ziffern 20-23, die entsprechende Zonen darstellen, eine Erhöhung der Helligkeit ergeben hat. Eine entsprechende Erhöhung der Helligkeit ist auch bei der dritten, in Fig. 4 rechten, Probe ersichtlich. Dies ergibt sich wiederum insbesondere aus dem in Fig. 5 dargestellten Diagramm im Bereich der Ziffern 17-20.

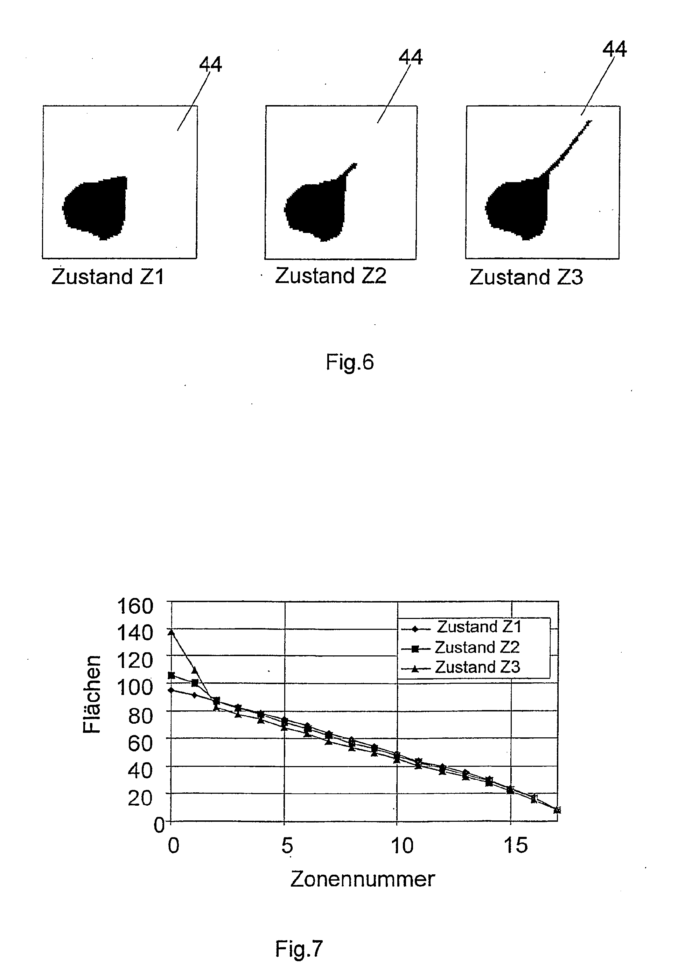

Anhand des in den Fign. 6 und 7 dargestellten Beispiels ist ersichtlich, dass mit Hilfe des erfindungsgemäßen Verfahrens auf einfache Weise das Wachstum von Axonen bei Nervenzellen festgestellt werden kann.

In Fig. 6 sind drei Partikelbilder 44 bei unterschiedlichen Zuständen z1, z2 und z3 dargestellt. Die Zelle ist wiederum mit dem anhand in Fig. 1 beschriebenen Zonendefinitionsverfahren in einzelne Partikelzonen unterteilt, die hier im einzelnen nicht dargestellt sind. Im dargestellten Beispiel wurde wiederum drei Proben unterschiedliche Substrate beigegeben. Nach einem vorgegebenen Zeitraum, der wiederum ggf. mehrere Stunden lang sein kann, werden die drei Proben untersucht. Hierbei wird von jeder der Proben ein Partikelbild sowie ein Partikelbild 44 erzeugt. Die drei Partikelbilder 44 zeigen sodann unterschiedliche Zustände z1,z2 und z3 von unterschiedlichen Zellen, d.h. Zustände in den einzelnen Proben. Bereits aus den Abbildungen in Fig. 6 ist ersichtlich, dass insbesondere die Zellen in der dritten Probe (rechtes Bild in Fig. 6) auf das beigegebene Substrat reagieren und lange Axone ausbilden. Auch in der mittleren Probe wurde ein, wenn auch nicht so langes, Axon ausgebildet. Bei der linken Probe ist ersichtlich, dass keine Reaktion stattgefunden hat. Je nach Länge des ausgebildeten Axons nimmt die Größe der Fläche der äußeren Zone in unterschiedlichen Proben unterschiedlich zu. Dies ist insbesondere aus dem in Fig. 7 dargestellten Diagramm ersichtlich. Die Fläche der äußeren Zone, die in Fig. 7 links dargestellt ist, ist in dem Zustand z3 größer als in dem Zustand z1. Es ist somit allein durch einen Vergleich der in Fig. 7 dargestellten Kurven möglich, zu erkennen, bei welchen Zellen Axone gewachsen sind und bei welchen nicht.

**Patentansprüche**

1. Verfahren zur Untersuchung chemischer und/oder biologischer Proben, insbesondere mit Hochdurchsatz- oder Mediumdurchsatz-Screeninganlagen, mit den Schritten:

     Erzeugen jeweils mindestens eines Partikelbildes (42) von mindestens einer Probe mit jeweils mindestens einem in der Probe enthaltenen Partikel,
Bestimmen einer Partikelfläche des mindestens einen Partikels,
Definieren mehrerer, von subpartikulären Kompartimenten unabhängiger, Partikelzonen (14, 18; 22, 24; 32, 34, 36) in der Partikelfläche,
zonenabhängiges Erfassen von Partikeldaten der Probe und
Auswerten der erfassten Partikeldaten,

bei welchem vor der Definition der Partikelzonen (14, 18; 22, 24; 32, 34, 36) die Partikelgrenze (12) bestimmt wird.

2. Verfahren nach Anspruch 1, bei welchem die Partikelzonen (14, 18; 22, 24; 32, 34, 36) innerhalb jeweils eines Partikelbildes definiert werden.

3. Verfahren nach Anspruch 1, bei welchem mehrere Partikelbilder (42) aufgenommen werden und mindestens eine Partikelzone (14, 18; 22, 24; 32, 34, 36) definiert wird, die sich über mehrere Partikelbilder erstreckt.

4. Verfahren nach mindestens einem der Ansprüche 1 bis 3, bei welchem mehrere Partikelbilder von mehreren Proben und/ oder mehrere Partikelbilder (42) zu unterschiedlichen Zeitpunkten von einer Probe erzeugt werden.

5. Verfahren nach mindestens einem der Ansprüche 1 bis 4, bei welchem die Partikelzonen (14, 18; 22, 24; 32, 34, 36) innerhalb einer Partikelfläche (10) des mindestens einen in dem Partikelbild (42) enthaltenen Partikels definiert werden.

6. Verfahren nach mindestens einem der Ansprüche 1 bis 5, bei welchem im wesentlichen die gesamte Partikelfläche (10) in Partikelzonen (14; 18; 22, 24; 32, 34, 36) unterteilt wird.

7. Verfahren nach mindestens einem der Ansprüche 1 bis 6, bei welchem außerhalb der Partikelfläche (10) angeordnete Außenzonen definiert werden.

8. Verfahren nach mindestens einem der Ansprüche 1 bis 7, bei welchem mindestens eine Partikelzone (14, 18; 22, 24; 32, 34, 36) definiert wird, die sich über Teile der Partikelfläche (10) und über eine außerhalb der Partikelfläche (10) liegende Fläche erstreckt.

9. Verfahren nach mindestens einem der Ansprüche 1 bis 8, bei welchem unmittelbar vor dem Erfassen der Partikeldaten die Partikelzonen (14,18;22,24; 32,34,36) definiert werden.

10. Verfahren nach einem der Ansprüche 1 bis 9, bei welchem beim Auswerten der Partikeldaten unterschiedliche Zustände (z1, z2, z3) jeweils eines oder mehrerer in der Probe enthaltener Partikel miteinander verglichen werden.

11. Verfahren nach mindestens einem der Ansprüche 1 bis 8, bei welchem Proben unterschiedlicher Partikelzustände, insbesondere unterschiedlicher Zellzustände, untersucht werden.

12. Verfahren nach mindestens einem der Ansprüche 1 bis 11, bei welchem die Probe vor dem Erzeugen des Partikelbildes (42) eingefärbt wird.

13. Verfahren nach einem der Ansprüche 1 bis 12, bei welchem die Partikelzonen (14, 18; 22, 24; 32, 34, 36) definiert werden durch eine innere Grenzlinie (20) und eine äußere Grenzlinie (16), die jeweils einen im wesentlichen konstanten Abstand zur Partikelgrenze (12) aufweisen.

14. Verfahren nach einem der Ansprüche 1 bis 13, bei welchem die Grenzlinien (28, 30) im wesentlichen geometrisch ähnliche Formen aufweisen und vorzugsweise zur Definition von Partikelzonen (22, 24) konzentrisch zueinander angeordnet werden

15. Verfahren nach einem der Ansprüche 1 bis 14, bei welchem innerhalb der Partikelfläche (10) ein Hauptpunkt (38) definiert wird und von diesem radial verlaufende Grenzlinien (40) zur Partikelgrenze (12) zur Definition von Partikelzonen (32, 34, 36) definiert werden.

16. Verfahren nach Anspruch 15, bei welchem als Hauptpunkt (38) der hellste Punkt innerhalb der Partikelfläche (10) definiert wird.

17. Verfahren nach einem der Ansprüche 15 und/oder 16, bei welchem die radial verlaufenden Grenzlinien (40) einen im wesentlichen gleichen Öffnungswinkel zueinander aufweisen.

18. Verfahren nach einem der Ansprüche 1 bis 17, bei welchem die einzelnen Zonen derart bestimmt werden, dass sie im wesentlichen gleiche Flächen aufweisen.

19. Verfahren nach einem der Ansprüche 1 bis 18, bei welchem als Partikeldaten die Größe der Partikelzonen (14, 18; 22, 24; 32, 34, 36), insbesondere bei unterschiedlichen Zuständen (z1, z2, z3), und/oder die Helligkeit der Partikelzonen (14, 18; 22, 24; 32, 34, 36), insbesondere bei unterschiedlichen Zuständen (z1, z2, z3), bestimmt wird.

20. Verfahren nach mindestens Ansprüche 1 bis 19, bei welchem der mindestens eine Partikel eine Zelle ist und von subzellulären Kompartimenten unabhängige Zonen definiert werden und/oder die Zelle Bestandteil eines Zellverbundes ist.

21. Verfahren nach mindestens einem der Ansprüche 1 bis 20, bei welchem Proben unterschiedlicher Zellzustände untersucht werden, und der Zellzustand insbesondere Apoptose, Nekrose, Translokation von zellulären Bestandteilen, Internalisierung von membranständigen Molekülen oder Molekülkomplexen, Zelldifferenzierung, morphologisches Erscheinungsbild, Aufspaltung von subzellulären Kompartimenten und/oder Generierung von subzellulären Kompartimenten umfasst und/oder bei welchem der Zellzustand durch Zugabe von chemischen und/oder biologischen Substanzen, insbesondere potentiellen pharmakologischen Wirkstoffen beeinflusst wird.

**Claims**

1. Method for analyzing chemical and/or biological samples, particularly with high-throughput or medium-throughput screening installations, with the steps of:

   respectively producing at least one particle image (42) of at least one sample with at least one particle being included in the sample, respectively,
   determining a particle surface of the at least one particle,
   defining several particle zones (14,18;22,24; 32,34,36) in the particle surface which are independent of subparticular compartments,
   acquiring particle data of the sample dependent on the zone, and
   evaluating the acquired particle data,

   wherein the particle boundary (12) is determined before the particle zones (14; 18; 22,24;32,34,36) are defined.

2. Method according to claim 1, wherein the particle zones (14,18;22,24;32,34,36) are defined within one particle image, respectively.

3. Method according to claim 1, wherein several particle images (42) are acquired and at least one particle zone (14,18;22,24;32,34,36) is defined which extends over several particle images.

4. Method according to at least one of claims 1 to 3, wherein several particle images are produced of several samples and/or several particle images (42) are produced of one sample at different points in time.

5. Method according to at least one of claims 1 to 4, wherein the particle zones (14,18;22,24;32,34,36) are defined within a particle surface (10) of the at least one particle included in the particle image (42).

6. Method according to at least one of claims 1 to 5, wherein substantially the entire particle surface (10) is divided into particle zones (14;18; 22,24; 32,34,36).

7. Method according to at least one of claims 1 to 6, wherein outer zones arranged outside the particle surface (10) are defined.

8. Method according to at least one of claims 1 to 7, wherein at least one particle zone (14;18; 22,24; 32,34,36) is defined which extends over parts of the particle surface (10) and over a surface lying outside the particle surface (10).

9. Method according to at least one of claims 1 to 8, wherein the particle zones (14;18; 22,24;32,34,36) are defined immediately before the acquisition of the particle data.

10. Method according to one of claims 1 to 9, wherein different states (z1, z2, z3) of one or more particles included in the sample, respectively, are compared with each other when evaluating the particle data.

11. Method according to at least one of claims 1 to 8, wherein samples of different particle states, in particular different cell states, are analyzed.

12. Method according to at least one of claims 1 to 11, wherein the sample is colored before the particle image (42) is produced.

13. Method according to one of claims 1 to 12, wherein the particle zones (14,18;22,24;32,34,36) are defined by an inner boundary line (20) and an outer boundary line (16), each of which has a substantially constant distance to the particle boundary (12).

14. Method according to one of claims 1 to 13, wherein the boundary lines (28,30) have substantially geometrically similar shapes and are preferably arranged concentrically with respect to each other to define particle zones (22,24).

15. Method according to one of claims 1 to 14, wherein a main point (38) is defined within the particle surface (10) and boundary lines (40) extending radially therefrom to the particle boundary (12) are defined to define particle zones (32,34,36).

16. Method according to claim 15, wherein the most luminous point within the particle surface (10) is defined as the main point (38).

**17.** Method according to one of claims 15 and/or 16, wherein the radially extending boundary lines (40) have a substantially identical aperture angle with respect to each other.

**18.** Method according to one of claims 1 to 17, wherein the individual zones are determined such that they have substantially the same surface areas.

**19.** Method according to one of claims 1 to 18, wherein the size of the particle zones (14;18; 22,24; 32,34,36), particularly in different states ($z_1$, $z_2$, $z_3$), is determined as particle data and/or the luminosity of the particle zones (14;18;22,24;32,34,36), particularly in different states ($z_1$, $z_2$, $z_3$), is determined as particle data.

**20.** Method according to at least claims 1 to 19, wherein the at least one particle is a cell and zones independent of subcellular compartments are defined and/or the cell forms part of a cell compound.

**21.** Method according to at least one of claims 1 to 20, wherein samples of different cell states are analyzed and the cell state particularly comprises apoptosis, necrosis, translocation of cellular components, internalization of membraneous molecules or molecule complexes, cell differentiation, morphological appearance, splitting of subcellular compartments and/or generation of cellular compartments and/or wherein the cell state is influenced by adding chemical and/or biological substances, particularly potential pharmacologically active substances.

## Revendications

**1.** Procédé d'analyse d'échantillons chimiques et/ou biologiques, en particulier à l'aide d'installations de criblage à haut ou à moyen débit, comprenant les étapes suivantes :

     production d'au moins une image des particules (42) d'au moins chaque échantillon, comportant chacune au moins une particule contenue dans l'échantillon,
     détermination d'une surface particulaire de ladite particule au moins au nombre de une,
     définition de plusieurs zones particulaires (14, 18 ; 22, 24 ; 32, 34, 36) indépendantes de compartiments sous-particulaires dans la surface particulaire,
     enregistrement, en fonction de la zone, des données particulaires de l'échantillon, et
     évaluation des données particulaires enregistrées,

dans lequel, avant la définition des zones particulaires (14, 18 ; 22, 24 ; 32, 34, 36), on détermine la limite (12) des particules.

**2.** Procédé selon la revendication 1, dans lequel les zones particulaires (14, 18 ; 22, 24 ; 32, 34, 36) sont définies à l'intérieur de chaque image de particules.

**3.** Procédé selon la revendication 1, dans lequel plusieurs images de particules (42) sont enregistrées, et au moins une zone particulaire (14, 18 ; 22, 24 ; 32, 34, 36) est définie, qui s'étend sur plusieurs images de particules.

**4.** Procédé selon au moins l'une des revendications 1 à 3, dans lequel sont produites plusieurs images de particules de plusieurs échantillons, et/ou plusieurs images de particules (42) d'un échantillon à différents moments.

**5.** Procédé selon au moins l'une des revendications 1 à 4, dans lequel les zones particulaires (14, 18 ; 22, 24 ; 32, 34, 36) sont définies à l'intérieur d'une surface particulaire (10) de ladite particule, au moins au nombre de une, contenue dans l'image de particules (42).

**6.** Procédé selon au moins l'une des revendications 1 à 5, dans lequel pour l'essentiel la totalité de la surface particulaire (10) est subdivisée en zones particulaires (14, 18 ; 22, 24 ; 32, 34, 36).

**7.** Procédé selon au moins l'une des revendications 1 à 6, dans lequel sont définies des zones extérieures disposées à l'extérieur de la surface particulaire (10).

**8.** Procédé selon au moins l'une des revendications 1 à 7, dans lequel au moins une zone particulaire (14, 18 ; 22, 24 ; 32, 34, 36) est définie, qui s'étend sur des parties de la surface particulaire (10) et sur une surface se trouvant à l'extérieur de la surface particulaire (10).

**9.** Procédé selon au moins l'une des revendications 1 à 8, dans lequel les zones particulaires (14, 18 ; 22, 24 ; 32, 34, 36) sont définies immédiatement avant l'enregistrement des données particulaires.

**10.** Procédé selon l'une des revendications 1 à 9, dans lequel, lors de l'évaluation des données particulaires, différents états ($z_1$, $z_2$, $z_3$) d'une ou plusieurs des particules contenues dans l'échantillon, sont comparés entre eux.

**11.** Procédé selon au moins l'une des revendications 1 à 8, dans lequel on analyse des échantillons présentant différents états particulaires, en particulier différents états cellulaires.

**12.** Procédé selon au moins l'une des revendications 1 à 11, dans lequel l'échantillon est coloré avant production de l'image de particules (42).

**13.** Procédé selon l'une des revendications 1 à 12, dans lequel les zones particulaires (14, 18 ; 22, 24 ; 32, 34, 36) sont définies par une délimitation interne (20) et une délimitation externe (16), dont chacune présente avec la limite de la particule (12) un écart sensiblement constant.

**14.** Procédé selon l'une des revendications 1 à 13, dans lequel les délimitations (28, 30) présentent des formes géométriques sensiblement identiques, et de préférence, pour la définition des zones particulaires (22, 24), sont disposées concentriquement les unes aux autres.

**15.** Procédé selon l'une des revendications 1 à 14, dans lequel un point principal (38) est défini dans la surface particulaire (10), et des délimitations (40), s'étendant radialement à partir du point principal jusqu'à la limite de la particule (12), sont définies pour la définition des zones particulaires (32, 34, 36).

**16.** Procédé selon la revendication 15, dans lequel on définit en tant que point principal (38) le point le plus clair à l'intérieur de la surface particulaire (10).

**17.** Procédé selon l'une des revendications 15 et/ou 16, dans lequel les délimitations s'étendant radialement (40) présentent les unes par rapport aux autres un angle d'ouverture sensiblement constant.

**18.** Procédé selon l'une des revendications 1 à 17, dans lequel les zones individuelles sont déterminées de façon à présenter chacune une aire sensiblement identique.

**19.** Procédé selon l'une des revendications 1 à 18, dans lequel on détermine en tant que données particulaires la taille des zones particulaires (14, 18 ; 22, 24 ; 32, 34, 36), en particulier pour des états (z1, z2, z3) différents, et/ou la clarté des zones particulaires (14, 18 ; 22, 24 ; 32, 34, 36), en particulier pour des états (z1, z2, z3) différents.

**20.** Procédé selon au moins les revendications 1 à 19, dans lequel ladite au moins une particule est une cellule, et des zones indépendantes de compartiments sous-cellulaires sont définies, et/ou la cellule est un constituant d'un conglomérat cellulaire.

**21.** Procédé selon au moins l'une des revendications 1 à 20, dans lequel on analyse des échantillons d'états cellulaires différents, et l'état cellulaire comprend en particulier une apoptose, une nécrose, une translocation de constituants cellulaires, une internalisation de molécules membranaires ou de complexes moléculaires, une différenciation cellulaire, l'aspect morphologique, une dissociation de compartiments sous-cellulaires et/ou une production de compartiments sous-cellulaires, et/ou dans lequel l'état cellulaire est influencé par l'addition de substances chimiques et/ou biologiques, en particulier de principes actifs pharmacologiques potentiels.

Fig.1

Fig.2

Fig.3

Zustand Z1    Zustand Z2    Zustand Z3

Fig.4

11

Fig.5

EP 1 495 433 B1

Zustand Z1     Zustand Z2     Zustand Z3

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5989835 A